# EUROPEAN PATENT APPLICATION

(11) **EP 4 286 486 A1**
(43) Date of publication of application: **06.12.2023**
(21) Application number: 23153940.4
(22) Date of filing: 30.01.2023
(51) Int. Cl.: C09J 5/02

(54) **METHODS OF APPLYING BOND PRIMER COMPOSITIONS FOR BONDED AEROSPACE STRUCTURES**

(30) Priority: 31.05.2022 US 202217828291
(71) Applicant: The Boeing Company, Arlington, VA 22202 (US)
(72) Inventor: KUTSCHA, EILEEN O., Chicago, 60606 (US); OLANDER, RITA J., Chicago, 60606 (US); CHANES, JAMES D., Chicago, 60606 (US)
(74) Representative: Lissandrini, Marco

(57) **Abstract**

Methods of applying a bond primer composition to a metal surface of an aerospace part are provided which may comprise forming a multilayer bond primer structure by (a) applying a first sublayer of a bond primer composition onto a metal surface of an aerospace part using a foam applicator comprising the bond primer composition; (b) heating the first sublayer; (c) applying a second sublayer of the bond primer composition onto the first sublayer; (d) heating the second sublayer; (e) applying a final sublayer of the bond primer composition onto an underlying sublayer of the multilayer bond primer structure; and curing the multilayer bond primer structure to form a bond primer coating adhered to the metal surface.

## Description

### BACKGROUND

Many aerospace structures are constructed from metal or metal alloy substrates that are bonded together via an adhesive. Bond primer compositions may be applied to such metal or metal alloy substrates prior to applying the adhesive and bonding the substrates together. In the aerospace industry, spray-coating is generally used to apply bond primer compositions to substrate surfaces.

### SUMMARY

Provided are methods of applying bond primer compositions on metal or metal alloy surfaces of aerospace parts using foam applicators. The present methods minimize environmental and health hazards associated with spray-coating due to the aerosolization of components from the bond primer compositions. At the same time, the present methods are able to achieve bond primer coatings exhibiting excellent bond performance, a critical metric in the aerospace industry.

In embodiments, a method of applying a bond primer composition to a metal surface of an aerospace part comprises forming a multilayer bond primer structure by (a) applying a first sublayer of a bond primer composition onto a metal surface of an aerospace part using a foam applicator comprising the bond primer composition; (b) heating the first sublayer; (c) applying a second sublayer of the bond primer composition onto the first sublayer; (d) heating the second sublayer; (e) applying a final sublayer of the bond primer composition onto an underlying sublayer of the multilayer bond primer structure; and curing the multilayer bond primer structure to form a bond primer coating adhered to the metal surface.

Other principal features and advantages of the disclosure will become apparent to those skilled in the art upon review of the following drawings, the detailed description, and the appended claims.

### BRIEF DESCRIPTION OF THE DRAWINGS

Illustrative embodiments of the disclosure will hereafter be described with reference to the accompanying drawings.
FIG. 1 shows a cross-sectional view of an illustrative bond primer coating adhered to a metal surface of an aerospace part.
FIG. 2 shows a cross-sectional view of an illustrative bonded aerospace structure.
FIGs. 3A and 3B demonstrate the application of an individual sublayer of a bond primer composition to an underlying surface according to an illustrative embodiment.
FIG. 4 plots the peel strength of a comparative bond primer coating (spray) and two bond primer coatings (foam roller and foam brush) formed according to illustrative embodiments.

### DETAILED DESCRIPTION

Provided are methods of applying bond primer compositions onto metal surfaces of aerospace parts. The methods involve forming a multilayer bond primer structure by applying multiple sublayers of a bond primer composition onto a metal surface of an aerospace part using a foam applicator. Individual sublayers are heated prior to applying another sublayer thereon. Once the desired number of sublayers has been applied, the multilayer bond primer structure is cured to form the bond primer coating adhered to the underlying metal surface. The methods are illustrated by reference to various embodiments further described below.

In embodiments, a method of applying a bond primer composition to a metal surface of an aerospace part comprises forming a multilayer bond primer structure by applying a first sublayer of a bond primer composition onto a metal surface of an aerospace part using a foam applicator comprising the bond primer composition; heating the first sublayer; applying a second sublayer of the bond primer composition onto the first sublayer; heating the second sublayer; applying a final sublayer of the bond primer composition onto an underlying sublayer of the multilayer bond primer structure; and curing the multilayer bond primer structure to form a bond primer coating adhered to the metal surface.

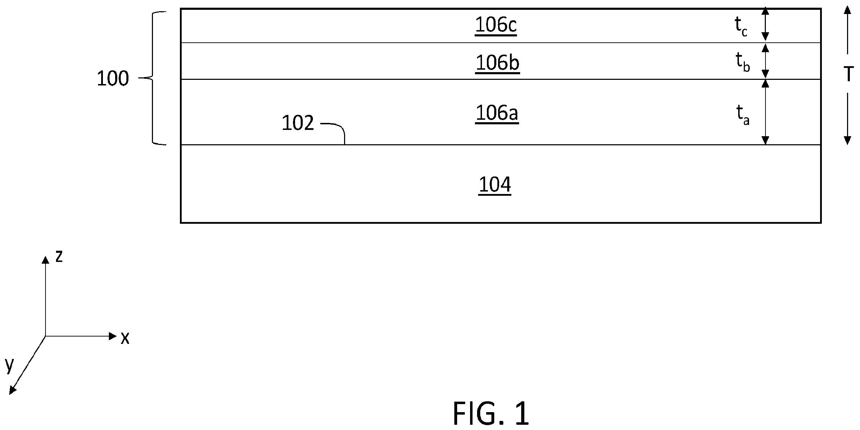

Although any desired number of sublayers of the bond primer composition may be applied, in embodiments, three sublayers are applied. In such embodiments, the multilayer bond primer structure and thus, the bond primer coating, consists of three sublayers. FIG. 1 shows a cross-sectional view of an illustrative bond primer coating 100 adhered to a metal surface 102 of an aerospace part 104. The bond primer coating 100 has a first sublayer 106a in contact with the metal surface 102, a second sublayer 106b in contact with the first sublayer 106a, and a third, uppermost sublayer 106c in contact with the second sublayer 106b. An axis system is shown in FIG. 1 for reference.

The bond primer composition for use in the present methods comprises a curable prepolymer. The phrase "curable prepolymer" refers to monomers, oligomers, polymers, or combinations thereof, in an uncrosslinked state. Upon exposure of the bond primer composition to certain conditions, further described below, the curable prepolymers undergo crosslinking reactions with other curable prepolymers to form a cured, crosslinked coating. The phrase "crosslinking reactions" refers to the formation of covalent bonds (i.e., crosslinks) between curable prepolymers of the bond primer composition.

Although a variety of bond primer compositions and curable prepolymers may be used, in embodiments, the curable prepolymers comprise epoxy prepolymers comprising epoxide groups. The types of such epoxy prepolymers are not particularly limited, but may include those that form phenol-based epoxies, novolac-based epoxies, aliphatic epoxies, halogenated epoxies, and glycidylamine epoxies.

Crosslinking/curing of epoxy prepolymers generally involves the reaction between epoxide groups of the epoxy prepolymers to form covalent crosslinks therebetween (i.e., homopolymerization) and/or the reaction between epoxide groups of the epoxy prepolymers and a hardener comprising a reactive hydrogen to form covalent crosslinks therebetween. Thus, the bond primer composition may further comprise a hardener. Hardeners which can react with epoxide groups include a variety of polyfunctional amines (including alkyl amines, cycloalkyl amines, aromatic amines); acids; anhydrides; phenols; alcohols; and thiols.

Catalysts may be included in the bond primer composition, including those comprising epoxy prepolymers. Catalysts which catalyze reactions involving epoxide groups of epoxy prepolymers include a variety of tertiary amines, carboxylic acids, alcohols, imidazoles, and boron trifluoride.

The bond primer composition may further comprise other components such as solvent(s), corrosion inhibitor(s), filler(s), viscosity modifier(s), pigment(s). Regarding corrosion inhibitors, in embodiments, a chromium-containing corrosion inhibitor is used in the bond primer composition, e.g., strontium chromate. However, in embodiments, no chromium-containing compound is used and the bond primer composition (and resulting bond primer coating) may be referred to as being "chromium free." The Examples, below, provide illustrative bond primer compositions that may be used in the present methods.

The metal surface being used in the present methods is that of an aerospace part. The phrase "aerospace part" refers to a part of any device, craft, machine, or component thereof used in the aerospace industry such as an aircraft such as an airplane; a rotocraft; a space vehicle such as a space ship; drone; satellite; fuselage; wing; and the like. The term "metal" encompasses any type of metal as well as any alloy thereof. In embodiments, the metal is aluminum (encompassing aluminum alloys). Various aluminum alloys may be used. In embodiments, the aluminum alloy is a 2000 series aluminum alloy, e.g., 2024-T3. In other embodiments, the aluminum alloy is a 6000 series aluminum alloy, e.g., 6013-T6. Other metals (encompassing alloys thereof) which may be used include titanium, niobium, and tungsten. The metal surface may be treated prior to applying the bond primer composition according to the present methods. Such treatments may include cleaning, sanding, deoxidizing, application of a sol-gel composition (to provide a porous sol-gel layer thereon), anodizing, or combinations thereof.

In the present methods, the bond primer composition is applied using a foam applicator. The term "foam" refers to a solid material defining a plurality of pores distributed throughout. The solid material may be composed of a polymer, e.g., polyurethane. In embodiments, the foam applicator is composed of a polyurethane and is free of polytetrafluoroethylene and free of silicone. The foam applicator may be characterized by its morphology. In embodiments, the foam applicator is a roller, i.e., a cylindrical body configured to apply the bond primer composition by rolling the cylindrical body along an underlying surface. In embodiments, the foam applicator is a brush, i.e., a rectangular body configured to apply the bond primer composition by pulling the rectangular body along an underlying surface. The overall dimensions of the foam applicator are not particularly limited, but may be selected depending upon the aerospace part to be coated. Foam applicators may be loaded with the bond primer composition by immersing the foam applicator therein, so as to fill the pores of the foam applicator with the bond primer composition.

Various techniques may be used to apply the individual sublayers of the bond primer composition. In embodiments, an individual sublayer may be applied by contacting the underlying surface (i.e., the metal surface, a previously applied sublayer, or a portion thereof) with the foam applicator comprising the bond primer composition and moving (e.g., rolling, pulling) the foam applicator across the underlying surface in a first direction followed by moving the foam applicator across the underlying surface in a second direction perpendicular to the first direction. Details of this illustrative application technique are provided in the Examples, below.

As noted above, individual sublayers of the bond primer composition are heated prior to applying another sublayer thereon. The heating may be carried out by exposing a sublayer to a source of heat (e.g., an electric heat gun) to achieve a surface temperature that is greater than room temperature (about 20 °C, i.e., about 68°F) but less than a glass transition temperature (T_{g}) of the bond primer composition. The surface temperature refers to the temperature at the surface of the heated sublayer which may be monitored, e.g., via an infrared temperature sensor. Although the specific surface temperature depends upon the bond primer composition being used, in embodiments, the heating is carried out to achieve a surface temperature in a range of from 48,88 °C to 71,11 °C (i.e., from 120°F to 160°F). This includes a range of from 51,66 °C to 68,33 °C (i.e., from 125°F to 155°F) and from 54,44 °C to 65,55 °C (i.e., from 130°F to 150°F). Although different sublayers may be heated to different surface temperatures, in embodiments, each sublayer is heated to the same surface temperature. Although the heating of sublayers as described herein may induce some curing, i.e., some crosslinking reactions between curable prepolymers of the bond primer composition, the degree of cure (i.e., percent cure) is less than what is achieved during the subsequent curing step. In embodiments, the degree of cure is less than 50%, less than 40%, or less than 30%.

To convert the multilayer bond primer structure to the bond primer coating, the multilayer bond primer structure is cured. This may be carried out by heating the multilayer bond primer structure, but to achieve curing, the temperature used is greater than what is used during heating of individual sublayers. In embodiments, the heating is carried out to achieve a degree of curing of at least 95%, at least 98%, or 100%. Although the specific heating conditions depend upon the bond primer composition being used, in embodiments, the heating is carried out using a temperature of from 200°C to 300°C and a period of time from 1 to 3 hours.

The multilayer bond primer structure and thus, the bond primer coating, may be characterized by its overall thickness. The overall thickness refers to the dimension of the bond primer coating as measured from a top surface of the bond primer coating to the metal surface of the aerospace part, along an axis normal (i.e., z axis) to the plane (i.e., xy plane) defined by the bond primer coating. By way of illustration, the overall thickness of the bond primer coating 100 is labeled "T" in FIG. 1. The overall thickness may be given as an average value, measured as described in the Examples, below. Generally, the overall thickness is in a range of from 0,15 mm to 0,40 mm.

Each sublayer of the bond primer coating may be characterized by its sublayer thickness, measured analogously to the overall thickness. By way of illustration, each sublayer thickness is labeled tₐ, t_{b}, t_{c}, respectively, in FIG. 1. The overall thickness corresponds to the sum of the sublayer thicknesses. Also as shown in FIG. 1, in embodiments, the thickness of the first sublayer 104a, i.e., the sublayer directly in contact with the metal surface 102, may be thicker than the thicknesses of any other sublayer in the multilayer bond primer structure. In embodiments, the thickness of the first sublayer is in a range of from 0,07 mm to 0,16 mm.

The other lateral (i.e., xy) dimensions of the bond primer coating and the individual sublayers are not particularly limited. Rather, they generally depend upon the lateral dimensions of the aerospace part being coated.

The present methods may further comprise one or more additional steps. For example, the methods may further comprise applying a layer of an adhesive composition on the bond primer coating. (As noted above, the "bond primer coating" refers to the cured multilayer bond primer structure.) The adhesive composition also generally comprises a curable prepolymer, although the type of curable prepolymer is generally different from that of the bond primer composition. A variety of adhesive compositions may be used, depending upon the type of aerospace part and bonded aerospace structure to be formed. Once applied, the layer of the adhesive composition may also be cured, e.g., by heating at an appropriate temperature for an appropriate period of time.

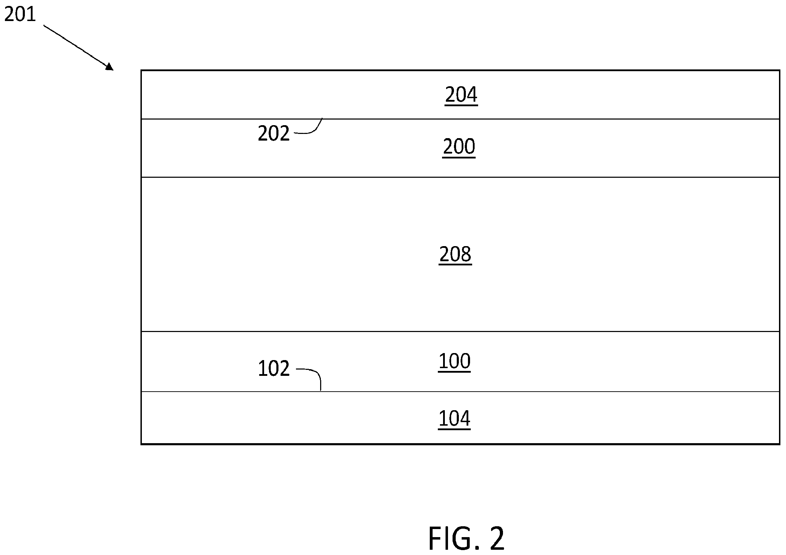

The present methods may further comprise placing a second metal surface of a second aerospace part on the layer of the adhesive composition (before or after curing the layer of the adhesive composition) to form a bonded aerospace structure. In embodiments, the second metal surface may have any of the disclosed bond primer coatings adhered thereto. An illustrative bonded aerospace structure 201 is shown in FIG. 2. The bonded aerospace structure 201 includes the bond primer coating 100 adhered to the metal surface 102 of the aerospace part 104. A second aerospace part 204 is adhered to the aerospace part 104 via a cured layer of an adhesive composition 208. A metal surface 202 of the second aerospace part 204 has a second bond primer coating 200 adhered thereto. The second bond primer coating 200 may be applied according to the methods disclosed herein and thus, may adopt any of the configurations described herein.

As noted above, the bond primer coatings formed using the present methods exhibit excellent bonding performance. Bonding performance may be assessed by carrying out one or more of the following tests as set forth in the Examples below: a scribe adhesion test, a climbing drum peel test, and a wedge crack environmental durability test. In embodiments, the bond primer coating exhibits an adhesion rating of 10 as measured under dry conditions, after a 7-day soak in water, and after a 30-day soak in hydraulic fluid. In embodiments, the bond primer coating exhibits a peel strength of at least 355,51 N-m/m (i.e., at least 80 in.lbs/in). In embodiments, the bond primer coating exhibits a % cohesive failure of at least 90%. These values refer to measuring these properties using the tests and conditions as set forth in the Examples, below.

### EXAMPLES

### Materials

The following foam applicators were used to apply bond primer compositions: 4" Padco^{®} Super Fine White Foam Roller (Part Number 3818), Shurline^{®} Foam Roller, Padco^{®} Gray Foam Brushes (Part Numbers 695, 692, 811, and 815).

Fourier Transform Infrared Spectroscopy (FTIR) spectra revealed that the composition of the foam of the 4" Padco^{®} Super Fine White Foam Rollers and the foam of the Padco^{®} Gray Foam Brushes 811 and 815 was consistent with that of a polyurethane free of polytetrafluoroethylene and free of silicone. The foam of these rollers and brushes was a high density, open cell, super fine foam.

As comparative examples, the following non-foam applicators were used to apply the bond primer compositions: 4" Padco^{®} Micronap/Nanofloc Roller, Wooster^{®} Lint Roller, Pro/doo-Z^{®} Lint Roller, and a polyvinylchloride (PVC) roller.

To form the bond primer coatings on the substrate surfaces, the following bond primer compositions were applied: BR^{®} 6747-1 Water Based Primer, 20-40% Solids, available from Cytec Industries (chromated bond primer composition) and BR^{®} 6747-1 NC 20% Solid Non-Chromated Water Based Primer, available from Cytec Industries (non-chromated bond primer composition).

For some tests, a layer of an adhesive composition was applied to bond primer coated substrate surfaces. The following adhesive compositions were used: a first type of epoxy-based 413,28 N/m² (i.e., 0,06 lb/in²) film adhesive (Adhesive 1) and a second type of epoxy-based 413,28 N/m² (i.e., 0,06 lb/in²) film adhesive (Adhesive 2).

A 12" x 12" (144 in², about 0,093 m²) aluminum alloy (2024-T3) substrate was used as the surface to be coated.

### Surface Preparation

Prior to application of the bond primer compositions, aluminum alloy substrates were treated by cleaning, sanding, and application of a sol-gel composition to form a porous sol-gel layer thereon.

### Application of Bond Primer Composition and Formation of Bond Primer Coating

The bond primer compositions were applied to the treated aluminum alloy substrates using the foam and non-foam applicators described above. The bond primer coatings were formed by applying multiple (2 to 4) sublayers of the bond primer composition with heating in between individual sublayers, followed by curing after applying the final, uppermost sublayer.

Each individual sublayer of bond primer composition was applied as follows. First, the applicator was loaded with the bond primer composition. Next, excess bond primer composition was removed from the applicator by rolling (roller) or pressing (brush) the applicator on a flat surface. Next, the loaded applicator was moved across the underlying surface in a first direction until the entire substrate received contact with the loaded applicator. Next, the loaded applicator was moved across the underlying surface in a second direction perpendicular to the first direction, again until the entire substrate received contact with the loaded applicator. Next, a dry applicator (not loaded with bond primer composition) was moved across the underlying surface until the entire substrate received contact with the dry applicator.

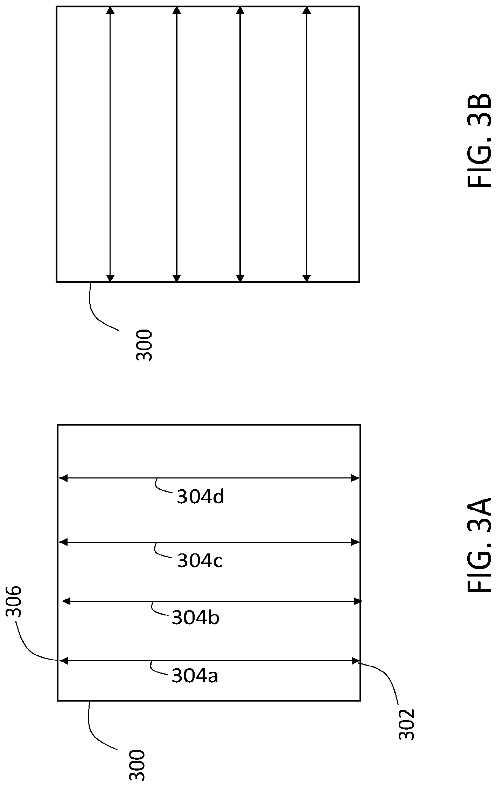

The term "moved across" refers to contacting the underlying surface with the applicator and rolling (in the case of roller applicators) or pulling (in the case of brush applicators) across the underlying surface. The term "moved across" also refers to one back-and-forth pass along the same axis. This is shown in FIG. 3A, illustrating the movement of an applicator across an underlying surface of a substrate 300 in a first direction until the entire substrate 300 has received contact with the foam applicator. Starting from position 302, the applicator is moved along axis 304a to position 306 and then back to position 302. Depending upon the relative dimensions of the applicator and the substrate 300, one or more additional back-and-forth passes (e.g., along axes 304b, 304c, and 304d) may be used to ensure that the entire substrate receives contact with the applicator. By way of illustration, for the 4" Padco White Rollers, about 4 back-and-forth passes were used. FIG. 3B illustrates the movement of the applicator across the same underlying surface of the substrate 300 but in a second direction perpendicular to the first direction, again until the entire substrate 300 has received contact with the applicator. Together, the movements illustrated in FIGs. 3A and 3B provide an individual as-applied sublayer of bond primer composition.

As noted above, prior to applying another sublayer of bond primer composition, the underlying as-applied sublayer was heated. This was carried out by passing an electric heat gun across the surface of the as-applied sublayer for about 5 to 10 minutes until a surface temperature (measured using an infrared temperature sensor) of about 60 °C (i.e., about 140°F) was obtained.

The desired number of sublayers of bond primer composition were applied as described above except that rather than using the electric heat gun on the final, uppermost sublayer, the multilayer bond primer structure (composed of as-applied sublayers of bond primer composition) on the treated aluminum alloy substrates were baked in an oven (250°F for 60 minutes) to cure the sublayers and provide the bond primer coating. The chromated bond primer composition was baked at 121,11 °C (i.e., at 250°F) for 60 minutes. The non-chromated bond primer composition was baked at 126,66 °C (i.e., 260°F) for 60 minutes.

As a comparative example, spray-coating was used to apply the bond primer compositions to treated aluminum alloy substrates.

For some tests (climbing drum peel test and wedge crack environmental durability tests), a layer of an adhesive composition was applied to the bond primer coatings formed as described above. As noted above, "bond primer coating" refers to the cured multilayer structure. An additional curing step was used to cure the as-applied layer of the adhesive composition.

### Testing Methods

The following tests were conducted on the bond primer coated aluminum alloy substrates and the adhesive and bond primer coated aluminum alloy substrates.

Coating thicknesses were measured by an eddy current method using an isoscope. Multiple thickness values (3-4) were obtained across the surface of the coated aluminum alloy substrates to provide an average thickness value.

Scribe adhesion tests were conducted under three conditions, dry, after a 7-day soak in water, and after a 30-day soak in hydraulic fluid. The tests were conducted by scribing the coated surface through the coating down to the underlying aluminum alloy surface with parallel scribes 30,48 cm (i.e., 0.12") apart at a 45° angle. A piece of masking tape was placed over the scribed area, pressed in place and removed. A rating of 10 indicates that no bond primer coating was removed. This is an indication of maximum adhesion of the bond primer coating to the underlying aluminum alloy surface.

Climbing drum peel tests were conducted on adhesive and bond primer coated aluminum alloy substrates. Peel coupons were fabricated and tested in accordance with ASTM D 1781 Standard Test Method for Climbing Drum Peel for Adhesives with 2024-T3 clad alloy.

Wedge crack environmental durability tests were conducted on adhesive and bond primer coated aluminum alloy substrates. Wedge coupons were fabricated and tested in accordance with ASTM D 3762 Standard Test Method for Adhesive-Bonded Surface Durability of Aluminum (Wedge Test). Wedge exposure conditions were 60 °C (i.e., 140°F) and 95-100% relative humidity for 7 days. Crack extension was measured at 24 hours and 7 days. The failure mode was evaluated in the crack extension region only.

### Results

Tables 1 and 2, below, show the overall thicknesses (Table 1) and adhesion ratings (Table 2) measured for bond primer coatings (3 sublayers) formed using the 4" Padco^{®} Super Fine White Foam Roller.

**Table 1. Thickness of Bond Primer Coatings.**

| | Chromated Bond Primer Coating | Non-chromated Bond Primer Coating |
|---|---|---|
| Average thickness (mm) | 0,20 | 0,20 |
| Standard Deviation | 0.02 | 0.01 |
| Coefficient of variation (COV) | 8% | 7% |
| Minimum thickness (mm) | 0,17 | 0,18 |
| Maximum thickness (mm) | 0,26 | 0,23 |

The results of Table 1 show that application of the bond primer compositions using the 4" Padco^{®} Super Fine White Foam Roller achieved bond primer coatings having an overall thickness of 0,20 mm (within the target range of from 0,15 mm to 0,4 mm) and excellent uniformity, i.e., low COV and no visible defects. Results obtained for the foam applicators Shurline^{®} Foam Roller and Padco^{®} Gray Foam Brushes (Part Numbers 695, 692, 811, and 815) (under the same application conditions) were similar to those shown in Table 1.

Results obtained for the non-foam applicators (under the same application conditions) 4" Padco^{®} Micronap/Nanofloc Roller, Wooster^{®} Lint Roller, Pro/doo-Z^{®} Lint Roller, and PVC roller showed that the resulting bond primer coatings were generally thinner and less uniform (greater COV and visible defects). In particular, the PVC roller was unable to achieve bond primer coatings having sufficient overall thicknesses (>0,15 mm).

**Table 2. Adhesion Ratings for Bond Primer Coatings.**

| | Chromated Bond Primer Coating | Non-chromated Bond Primer Coating |
|---|---|---|
| Dry Adhesion Test Rating | 10 | 10 |
| Water Adhesion Test Rating | 10 | 10 |
| Hydraulic Fluid Adhesion Test Rating | 10 | 10 |

The results of Table 2 show that application of the bond primer compositions using the 4" Padco^{®} Super Fine White Foam Roller achieved bond primer coatings having excellent adhesion to the underlying aluminum alloy surface. Results obtained for the foam applicators Shurline^{®} Foam Roller and Padco^{®} Gray Foam Brushes (Part Numbers 695, 692, 811, and 815) (under the same application conditions) were similar to those shown in Table 2.

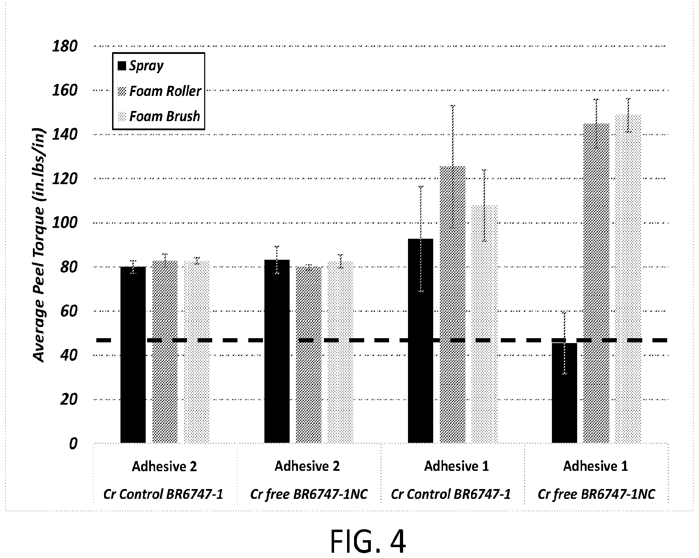

FIG. 4 shows the results of the climbing drum peel tests for adhesive and bond primer coated aluminum alloy substrates formed using spray-coating (comparative) and foam applicators. The foam applicators included the 4" Padco^{®} Super Fine White Foam Roller ("foam roller") and the Padco^{®} Gray Foam Brushes (Part Number 815) ("foam brush"). Five samples of each type of adhesive and bond primer coated aluminum alloy substrate were tested. As noted above, each sample includes a cured layer of an adhesive composition (either Adhesive 1 or Adhesive 2) on the bond primer coating. The results show that the bond primer coatings applied using the foam applicators have a peel strength similar to, or greater than, bond primer coatings applied using spray-coating.

Tables 3 and 4, below, shows the results of the wedge crack environmental durability tests for adhesive and bond primer coated aluminum alloy substrates formed using spray-coating (comparative) and foam applicators. The foam applicators included the 4" Padco^{®} Super Fine White Foam Roller ("foam roller") or the Padco^{®} Gray Foam Brushes (Part Number 815) ("foam brush"). Five samples of each type of adhesive and bond primer coated aluminum alloy substrate were tested. As noted above, each sample includes a cured layer of an adhesive composition (either Adhesive 1 or Adhesive 2) on the bond primer coating. Percent cohesive failure is the percentage of bonded area being evaluated that has separation within the adhesive layer of a tested bonded assembly.

**Table 3. Wedge Crack Results for Adhesive 1 - Bond Primer Coated Aluminum Alloy Substrates.**

| Adhesive | Applicator | Crack Length (inch) | | | % Failure Cohesive | Extension | standard deviation | % Failure Cohesive | standard deviation |
|---|---|---|---|---|---|---|---|---|---|
| | | Initial | Final | Extension | | | | | |
| Adhesive 1 | spray | 1.28 | 1.47 | 0.20 | 92 | 0.16 | 0.03 | 96 | 2 |
| Adhesive 1 | spray | 1.15 | 1.30 | 0.15 | 96 | | | | |
| Adhesive 1 | spray | 1.15 | 1.28 | 0.13 | 98 | | | | |
| Adhesive 1 | spray | 1.13 | 1.28 | 0.15 | 97 | | | | |
| Adhesive 1 | spray | 1.24 | 1.40 | 0.16 | 97 | | | | |
| | | | | | | | | | |
| Adhesive 1 | foam roller | 1.20 | 1.39 | 0.19 | 85 | 0.14 | 0.06 | 87 | 9 |
| Adhesive 1 | foam roller | 1.16 | 1.21 | 0.05 | 83 | | | | |
| Adhesive 1 | foam roller | 1.10 | 1.21 | 0.11 | 100 | | | | |
| Adhesive 1 | foam roller | 1.10 | 1.28 | 0.18 | 90 | | | | |
| Adhesive 1 | foam roller | 1.18 | 1.35 | 0.18 | 75 | | | | |
| | | | | | | | | | |
| Adhesive 1 | foam brush | 1.19 | 1.38 | 0.19 | 93 | 0.16 | 0.04 | 90 | 2 |
| Adhesive 1 | foam brush | 1.08 | 1.20 | 0.13 | 88 | | | | |
| Adhesive 1 | foam brush | 1.10 | 1.28 | 0.18 | 92 | | | | |
| Adhesive 1 | foam brush | 1.15 | 1.26 | 0.11 | 89 | | | | |
| Adhesive 1 | foam brush | 1.17 | 1.38 | 0.21 | 90 | | | | |
| | | | | | | | | | |
| Adhesive 1 | spray | 1.25 | 1.35 | 0.10 | 96 | 0.15 | 0.05 | 91 | 7 |
| Adhesive 1 | spray | 1.15 | 1.30 | 0.15 | 94 | | | | |
| Adhesive 1 | spray | 1.13 | 1.23 | 0.10 | 96 | | | | |
| Adhesive 1 | spray | 1.20 | 1.35 | 0.15 | 90 | | | | |
| Adhesive 1 | spray | 1.15 | 1.38 | 0.23 | 80 | | | | |
| | | | | | | | | | |
| Adhesive 1 | foam roller | 1.20 | 1.35 | 0.15 | 45 | 0.14 | 0.04 | 68 | 36 |
| Adhesive 1 | foam roller | 1.08 | 1.23 | 0.15 | 15 | | | | |
| Adhesive 1 | foam roller | 1.16 | 1.24 | 0.08 | 90 | | | | |
| Adhesive 1 | foam roller | 1.10 | 1.28 | 0.18 | 96 | | | | |
| Adhesive 1 | foam roller | 1.28 | 1.43 | 0.15 | 93 | | | | |
| | | | | | | | | | |
| Adhesive 1 | foam brush | 1.20 | 1.65 | 0.45 | 25 | 0.51 | 0.06 | 5 | 11 |
| Adhesive 1 | foam brush | 1.12 | 1.64 | 0.52 | 0 | | | | |
| Adhesive 1 | foam brush | 1.07 | 1.58 | 0.51 | 0 | | | | |
| Adhesive 1 | foam brush | 1.10 | 1.70 | 0.60 | 0 | | | | |
| Adhesive 1 | foam brush | 1.16 | 1.65 | 0.49 | 0 | | | | |

**Table 4. Wedge Crack Results for Adhesive 2 - Bond Primer Coated Aluminum Alloy Substrates.**

| Adhesive | Applicator | Crack Length (inch) | | | % Failure Cohesive | Extension | standard deviation | % Failure Cohesive | standard deviation |
|---|---|---|---|---|---|---|---|---|---|
| | | Initial | Final | Extension | | | | | |
| Adhesive 2 | spray | 1.35 | 1.58 | 0.23 | 65 | 0.21 | 0.02 | 85 | 12 |
| Adhesive 2 | spray | 1.31 | 1.53 | 0.22 | 88 | | | | |
| Adhesive 2 | spray | 1.30 | 1.49 | 0.19 | 94 | | | | |
| Adhesive 2 | spray | 1.35 | 1.55 | 0.20 | 94 | | | | |
| Adhesive 2 | spray | 1.30 | 1.53 | 0.23 | 85 | | | | |
| | | | | | | | | | |
| Adhesive 2 | foam roller | 1.28 | 1.60 | 0.33 | 50 | 0.26 | 0.05 | 63 | 15 |
| Adhesive 2 | foam roller | 1.25 | 1.55 | 0.30 | 60 | | | | |
| Adhesive 2 | foam roller | 1.30 | 1.51 | 0.21 | 70 | | | | |
| Adhesive 2 | foam roller | 1.30 | 1.52 | 0.22 | 85 | | | | |
| Adhesive 2 | foam roller | 1.26 | 1.52 | 0.26 | 50 | | | | |
| | | | | | | | | | |
| Adhesive 2 | foam brush | 1.38 | 1.51 | 0.14 | 89 | 0.20 | 0.05 | 93 | 4 |
| Adhesive 2 | foam brush | 1.28 | 1.55 | 0.28 | 90 | | | | |
| Adhesive 2 | foam brush | 1.30 | 1.48 | 0.18 | 93 | | | | |
| Adhesive 2 | foam brush | 1.27 | 1.50 | 0.23 | 96 | | | | |
| Adhesive 2 | foam brush | 1.33 | 1.53 | 0.20 | 98 | | | | |
| | | | | | | | | | |
| Adhesive 2 | spray | 1.33 | 1.55 | 0.23 | 70 | 0.22 | 0.04 | 80 | 10 |
| Adhesive 2 | spray | 1.35 | 1.55 | 0.20 | 90 | | | | |
| Adhesive 2 | spray | 1.35 | 1.60 | 0.25 | 90 | | | | |
| Adhesive 2 | spray | 1.33 | 1.48 | 0.15 | 80 | | | | |
| Adhesive 2 | spray | 1.34 | 1.60 | 0.26 | 70 | | | | |
| | | | | | | | | | |
| Adhesive 2 | foam roller | 1.30 | 1.47 | 0.17 | 95 | 0.15 | 0.03 | 95 | 3 |
| Adhesive 2 | foam roller | 1.25 | 1.42 | 0.17 | 97 | | | | |
| Adhesive 2 | foam roller | 1.35 | 1.45 | 0.10 | 97 | | | | |
| Adhesive 2 | foam roller | 1.30 | 1.45 | 0.15 | 95 | | | | |
| Adhesive 2 | foam roller | 1.35 | 1.50 | 0.15 | 90 | | | | |
| | | | | | | | | | |
| Adhesive 2 | foam brush | 1.38 | 1.67 | 0.30 | 50 | 0.24 | 0.05 | 68 | 26 |
| Adhesive 2 | foam brush | 1.30 | 1.53 | 0.23 | 85 | | | | |
| Adhesive 2 | foam brush | 1.33 | 1.51 | 0.19 | 87 | | | | |
| Adhesive 2 | foam brush | 1.33 | 1.53 | 0.20 | 87 | | | | |
| Adhesive 2 | foam brush | 1.35 | 1.63 | 0.28 | 30 | | | | |

The word "illustrative" is used herein to mean serving as an example, instance, or illustration. Any aspect or design described herein as "illustrative" is not necessarily to be construed as preferred or advantageous over other aspects or designs. Further, for the purposes of this disclosure and unless otherwise specified, "a" or "an" means "one or more."

If not already included, all numeric values of parameters in the present disclosure are proceeded by the term "about" which means approximately. This encompasses those variations inherent to the measurement of the relevant parameter as understood by those of ordinary skill in the art. This also encompasses the exact value of the disclosed numeric value and values that round to the disclosed numeric value. Furthermore, where a certain quantity is indicated both in SI system and in United States customary units and doubts arise as to the correct numeric value, the United States customary units shall prevail.

Further, the disclosure comprises examples according to the following clauses:
1. A method of applying a bond primer composition to a metal surface 102 of an aerospace part 104, the method comprising:
   forming a multilayer bond primer structure by
      (a) applying a first sublayer 106a of a bond primer composition onto a metal surface 102 of an aerospace part104 using a foam applicator comprising the bond primer composition;
      (b) heating the first sublayer 106a ;
      (c) applying a second sublayer of the bond primer composition onto the first sublayer;
      (d) heating the second sublayer 106b;
      (e) applying a final sublayer 106c of the bond primer composition onto an underlying sublayer of the multilayer bond primer structure; and
   curing the multilayer bond primer structure to form a bond primer coating 100 adhered to the metal surface 102.
2. The method of clause 1, wherein three sublayers 106a, 106b, 106c are applied so that the bond primer coating 100 consists of three sublayers.
3. The method of clauses 1 or 2, wherein the bond primer composition comprises epoxy prepolymers.
4. The method of any of clauses 1 to 3, wherein the bond primer composition comprises a chromium-containing compound.
5. The method of any of clauses 1 to 4, wherein the bond primer composition is free of a chromium-containing compound.
6. The method of any of clauses 1 to 5, wherein the metal of the metal surface is an aluminum alloy.
7. The method of any of clauses 1 to 6, wherein the foam applicator is composed of a polyurethane and is free of polytetrafluoroethylene and free of silicone.
8. The method of any of clauses 1 to 7, wherein each sublayer of the multilayer bond primer structure is applied by contacting an underlying surface with the foam applicator and moving the foam applicator across the underlying surface in a first direction followed by moving the foam applicator across the underlying surface in a second direction perpendicular to the first direction.
9. The method of any of clauses 1 to 8, wherein steps (b) and (d) are carried out by exposing the first and second sublayers 106a, 106b to a source of heat to achieve a surface temperature that is greater than room temperature but less than a glass transition temperature of the bond primer composition.
10. The method of clause 9, wherein the source of heat is an electric heat gun.
11. The method of clause 9, wherein the surface temperature is in a range of from 120°F to 160°F.
12. The method of any of clauses 1 to 11, wherein the curing is carried out by heating the multilayer bond primer structure at a temperature greater than temperatures used in steps (b) and (d).
13. The method of any of clauses 1 to 12, wherein the bond primer coating 100 has an overall thickness in a range of from 0.15 mm to 0.40 mm.
14. The method of any of clauses 1 to 13, wherein the first sublayer 106a has a sublayer thickness that is greater than all other sublayer thickness of all other sublayers in the multilayer bond primer structure.
15. The method of any of clauses 1 to 14, the method further comprising applying a layer of an adhesive composition 208 onto the bond primer coating 100, followed by curing the layer of the adhesive composition 208.
16. The method of clause 15, the method further comprising placing a second metal surface 202 of a second aerospace part 204 on the layer of the adhesive composition 208 to form a bonded aerospace structure 201.
17. The method of any of clauses 1 to 16, wherein the bond primer coating 100 exhibits an adhesion rating of 10 as measured under dry conditions, after a 7-day soak in water, and after a 30-day soak in hydraulic fluid.
18. The method of clause 15, wherein the bond primer coating 100 exhibits a peel strength of at least 80 in.lbs/in.
19. The method of clause 15, wherein the bond primer coating 100 exhibits a % cohesive failure of at least 90%.
20. The method of any of clauses 1 to 19, wherein the metal surface of the aerospace part 104 is curved.

The foregoing description of illustrative embodiments of the disclosure has been presented for purposes of illustration and of description. It is intended that the scope of the disclosure be defined by the claims appended hereto and their equivalents.

## Claims

1. A method of applying a bond primer composition to a metal surface (102) of an aerospace part (104), the method comprising:
forming a multilayer bond primer structure by
(a) applying a first sublayer (106a) of a bond primer composition onto a metal surface (102) of an aerospace part (104) using a foam applicator comprising the bond primer composition;
(b) heating the first sublayer (106a);
(c) applying a second sublayer of the bond primer composition onto the first sublayer;
(d) heating the second sublayer (106b);
(e) applying a final sublayer (106c) of the bond primer composition onto an underlying sublayer of the multilayer bond primer structure; and
curing the multilayer bond primer structure to form a bond primer coating (100) adhered to the metal surface (102).

2. The method of claim 1, wherein three sublayers (106a, 106b, 106c) are applied so that the bond primer coating (100) consists of three sublayers.

3. The method of claims 1 or 2, wherein alternatively:
the bond primer composition comprises epoxy prepolymers and chromium-containing compound; or
the bond primer composition is free of a chromium-containing compound.

4. The method of any of claims 1 to 3, wherein the metal of the metal surface is an aluminum alloy.

5. The method of any of claims 1 to 4, wherein the foam applicator is composed of a polyurethane and is free of polytetrafluoroethylene and free of silicone.

6. The method of any of claims 1 to 5, wherein each sublayer of the multilayer bond primer structure is applied by contacting an underlying surface with the foam applicator and moving the foam applicator across the underlying surface in a first direction followed by moving the foam applicator across the underlying surface in a second direction perpendicular to the first direction.

7. The method of any of claims 1 to 6, wherein steps (b) and (d) are carried out by exposing the first and second sublayers (106a, 106b) to a source of heat to achieve a surface temperature that is greater than room temperature but less than a glass transition temperature of the bond primer composition, and wherein the source of heat is an electric heat gun, and further wherein the surface temperature is in a range of from about 48,88 °C (i.e., about 120°F) to about 71,11 °C (i.e., about 160°F).

8. The method of any of claims 1 to 7, wherein the curing step is carried out by heating the multilayer bond primer structure at a temperature greater than temperatures used in steps (b) and (d).

9. The method of any of claims 1 to 8, wherein the bond primer coating (100) has an overall thickness in a range of from 0,15 mm to 0,40 mm.

10. The method of any of claims 1 to 9, wherein the first sublayer (106a) has a sublayer thickness that is greater than all other sublayer thickness of all other sublayers in the multilayer bond primer structure.

11. The method of any of claims 1 to 10, the method further comprising applying a layer of an adhesive composition (208) onto the bond primer coating (100), followed by curing the layer of the adhesive composition (208).

12. The method of claim 11, the method further comprising placing a second metal surface (202) of a second aerospace part (204) on the layer of the adhesive composition (208) to form a bonded aerospace structure (201).

13. The method of any of claims 1 to 12, wherein the bond primer coating (100) exhibits an adhesion rating of 10 as measured under dry conditions, after a 7-day soak in water, and after a 30-day soak in hydraulic fluid.

14. The method of claim 11, wherein the bond primer coating (100) exhibits a peel strength of at least 355,51 N-m/m (i.e., about 80 in.lbs/in) and wherein the bond primer coating (100) exhibits a % cohesive failure of at least 90%.

15. The method of any of claims 1 to 14, wherein the metal surface of the aerospace part (104) is curved.
